(19) **Europäisches Patentamt**

**European Patent Office**

**Office européen des brevets**

(11) **EP 0 190 450 B2**

(12) # NEW EUROPEAN PATENT SPECIFICATION

(45) Date of publication and mention
of the opposition decision:
**28.04.1999 Bulletin 1999/17**

(51) Int Cl.⁶: **G01B 7/28**

(45) Mention of the grant of the patent:
**25.07.1990 Bulletin 1990/30**

(21) Application number: **85116082.0**

(22) Date of filing: **17.12.1985**

(54) **Device for measuring the profile of spectacles lens frame**

Vorrichtung zum Messen des Profils von Brillenfassungen

Dispositif de mesure du profil de montures de lunettes

(84) Designated Contracting States:
**DE FR GB IT NL**

(30) Priority: **25.12.1984 JP 281702/84**

(43) Date of publication of application:
**13.08.1986 Bulletin 1986/33**

(73) Proprietor: **Kabushiki Kaisha TOPCON Tokyo (JP)**

(72) Inventors:
• **Hara, Atsushi**
  **Machida-shi Tokyo (JP)**
• **Isokawa, Nobuhiro**
  **Kawasaki-shi Kanagawa-ken (JP)**
• **Suzuki, Yasuo**
  **Kuki-shi Saitama-ken (JP)**

• **Hatano, Yoshiyuki**
  **Itabashi-ku Tokyo (JP)**
• **Oogushi, Hiroaki**
  **Ohta-ku Tokyo (JP)**

(74) Representative: **Rost, Jürgen, Dipl.-Ing. et al
Patent- und Rechtsanwälte,
Bardehle . Pagenberg . Dost . Altenburg .
Geissler . Isenbruck
Postfach 86 06 20
81633 München (DE)**

(56) References cited:
EP-A- 0 061 918          EP-A- 0 092 364
DE-A- 3 316 619          GB-A- 1 187 683
GB-A- 1 553 414          US-A- 3 786 600
US-A- 4 026 031          US-A- 4 051 601

**Description**

The present invention relates to a device for measuring the profile of a spectacle lens frame according to the precharacterizing part of claim 1. More particularly, the invention is concerned with a spectacle lens frame measuring device suitable for use in combination with a lens grinding or edging machine which is adapted to grind or edge an unmachined or uncut spectacle lens in accordance with information concerning the profile of the lens frame.

A spectacle lens frame measuring device is shown in US-A-4,051,601. This known device includes frame holding means for holding a spectacle lens frame, support means for supporting the frame means, this support means being capable of moving the spectacle lens frame towards a measuring means, and within a plane which is perpendicular to a vertical shaft where the support means is perpendicular to the shaft, the measuring means including a sensor arm rotatable about a vertical axis and a sensor feeler movably mounted on the arm in a direction parallel with the vertical shaft.

The rotation of the feeler on its support about the axis and the displacement of the spectacle frame will be produced by the system.

US-A-3,786,600 discloses a counter grinder which has its axis positioned along the secondary radius (the distance from the line passing through the center of the grinding wheel to the axis of the glass lens holder) by a distance equal to the length of the principal radius (the distance from the line passing through the center of the shaft to the geormetric axis of the eyewire lens opening. In this known counter grinder the spectacle lens frame is secured by a clamping mechanism in the direction perpendicular to an axis of the glass lens so that if the spectacle lens frame is strongly secured.

EP-A-1 0 092 364 relates to a decive for measuring a lens to fit a spectacle frame in which the profile of the spectacle lens frame is measured in terms of polar coordinate information. This document is silent as to how to hold the spectacle lens frame and how to construct the tip of a probe.

In the prior art, for measuring the profile of the lens frame, the spectacle lens frame supported on the supporting means had to be translationally moved in order to apply the feeler against the groove of the frame and rotate the frame about the contact point of the feeler. Therefore, the prior art' device has disadvantages that the supporting means not only had to be complicated in its construction but also became large and that, furthermore, it was troublesome to hold the frame on the supporting means because jaws or clamps are employed as the holding means.

It is therefore an object of the present invention to provide a device for measuring the profile of a spectacle lens frame, in order to overcome the disadvantages of the prior art above-mentioned.

Another object of the present invention is to provide a spectacle frame measuring device being capable of measuring the profile of the frame in terms of polar coordinate information.

According to the present invention, the above object can be accomplished by a device according to the characterizing part of claim 1.

Further advantageous developments of the device according to the invention are mentioned in claims 2 and 3.

The above object and advantages of the present invention will become apparent from the following description of preferred embodiments with reference to the accompanying drawings.

| | |
|---|---|
| Fig. 1 | is a perspective view of a frame profile measuring device in accordance with one embodiment of the invention; |
| Fig. 2(A) | is a perspective view of a frame holding means incorporated in the device shown in fig. 1; |
| Fig. 2(B) and 2(C) | are vertical sectional views showing the operation of the holding means; |
| Fig. 3 | is a sectional view taken along the line A-A' in Fig. 2(A); |
| Fig. 4 | is a vertical sectional view of a spring device; |
| Fig. 5(A) | is a schematic illustration of the relationship between a supporting means and a sensor; |
| Fig. 5(B) | is a sectional view of the relationship shown in fig. 5(A); |
| Fig. 6 | is a partly cut-away sectional view of the sensor; |
| Fig. 7 | is a schematic illustration of the process for determining the geometrical center of a lens frame from the measured values of the lens frame; |
| Fig. 8 | is a block diagramm of a computing and controlling circuit incorporated in the embodiment of the invention; |
| Fig. 9(A) and (B) | are explanatory diagrams of the calculating principle of a curve value M. |

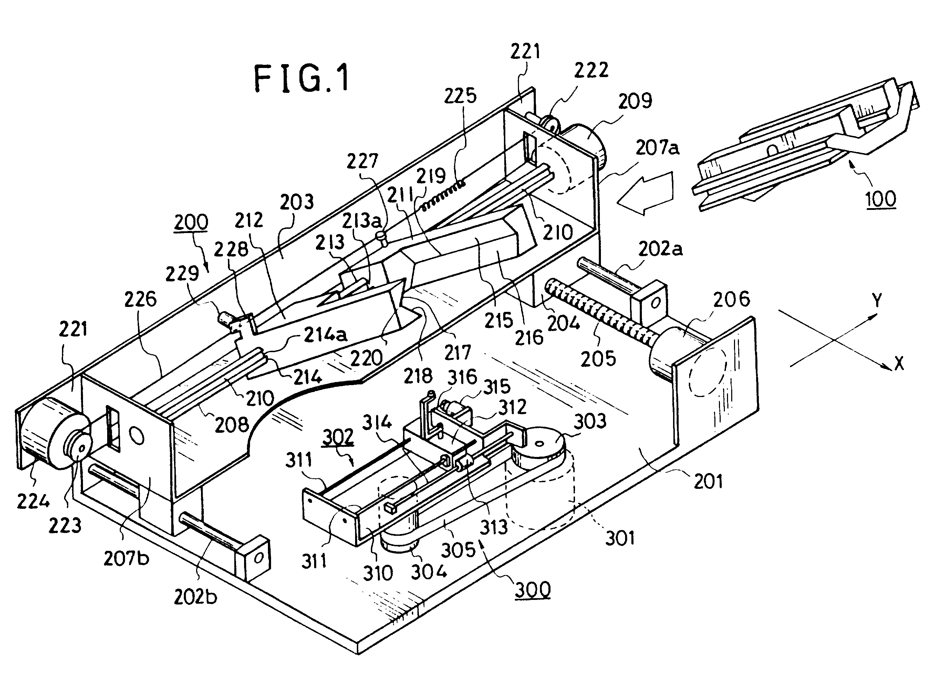

An embodiment of the invention will be explained hereinunder with reference to the accompanying drawings. Fig. 1 is a perspective view of lens frame profile measuring device in accordance with the invention. The device of the invention is composed of three major parts; namely, a frame holding means 100 for a spectacle lens frame; a supporting means 200 for supporting the frame holding means

100 and adapted for causing movement of said holding means into and out of the measuring plane; and a measuring section 300 for digitally measuring the profile of the spectacle lens frame or a template of the spectacle lens frame.

The supporting means 200 has a pair of parallel rails 202a, 202b arranged on the housing 201 such as to extend in the longitudinal direction (X-axis direction of the measuring coordinate system); and a movable stage 203 slidably carried by these rails 202a, 202b. A female screw thread 204 is formed in the lower side of the movable stage 203. An X-axis feeding screw 205 is screwed into the female thread portion 204. The X-axis feeding screw 205 is driven by an X-axis motor 206 which is a pulse motor.

A guide shaft 208 parallel to the Y-axis of the measuring coordinate system is extended between the side flanges 207a and 207b of the moving stage 203. The guide shaft 208 is adapted to be rotatively driven by a guide shaft motor 209 secured to a flange 207a. The guide shaft 208 is provided in the outer surface thereof with a guide groove 210 which extends in parallel with the axis of this guide shaft 208. The guide shaft 208 slidably carries supporters 211 and 212. The supporter 211, 212 have axialbores 213, 214 which are provided with projections 213a, 214a slidably engaging with the guide groove 210 in the guide shaft 208, thus preventing the supports 211, 212 from rotating about the guide shaft 208.

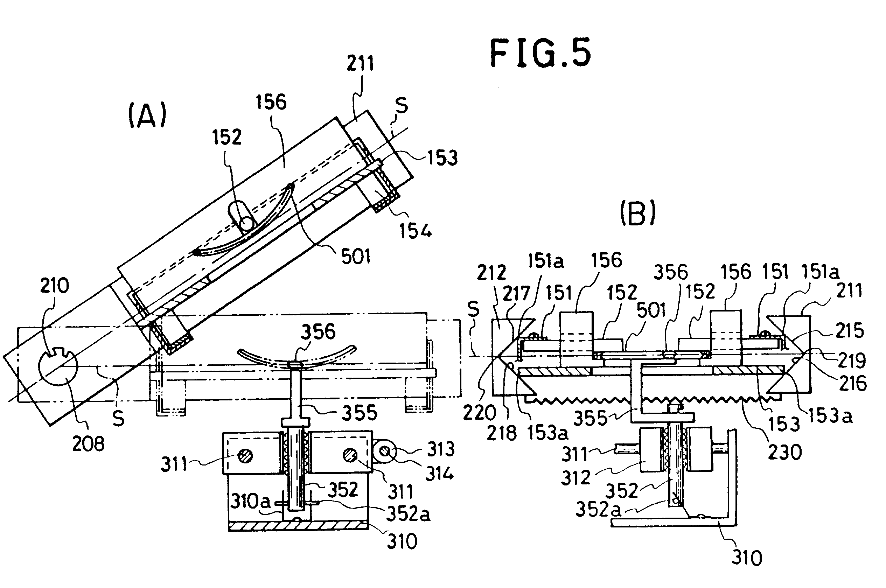

The supporter 211 has two slant surfaces 215, 216 which intersect each other. Similarly, the supporter 212 has two slant surfaces 217, 218 which intersect each other. The ridge line 220 formed by two slant surfaces 215, 216 and the ridge line 219 formed by two slant surfaces 215, 216 are parallel to each other and are disposed in the same plane. In addition, the angle formed between the two slant surfaces 217, 218 and the angle formed between the two slant surfaces 215, 216 are equal to each other. As shown in Figure 5(b), a spring 230 is stretched between the two supporters 211 and 212.

A pulley 222 is rotatably supported by one end of the rear flange 221 on the movable stage 203, while the other end of the flange 221 carries a Y-axis motor 224 having a pulley 223. A miniature belt 226 tensed by a spring 225 goes round both pulleys 223, 224. The ends of the miniature belt 226 are connected to a pin 227 provided on the supporter 211. A flange 228 is formed on the upper surface of the supporter 212. The flange 228 is constructed so as to be moved into and out of contact with the side surface of the pin 229 provided on the rear flange 221 of the movable stage 203.

The measuring section 300 includes a sensor arm driving motor 301 secured to the lower side of the housing 201, and a sensor arm arrangement 302 secured to the upper side of the housing 201. A belt 305 goes round a pulley 303 on the shaft of the motor 301 and the rotary shaft 304 of the sensor arm portion, so that the torque of the motor 301 is transmitted to the sensor arm. The sensor arm arrangement 302 has a pair of rails 311, 311 extended above the base 310, and a sensor head 312 is slidably carried by the rails 311, 311. A magnetic scale reading head 313 is attached to one side surface of the sensor head 312 so as to be able to read the magnetic scale 314 which is extended in parallel with the rails 311, thereby detecting the displacement of the sensor head 312. The head 312 is always urged towards the arm by means of a spiral spring 316 of a spring device 315 connected to the other side of the sensor head 312.

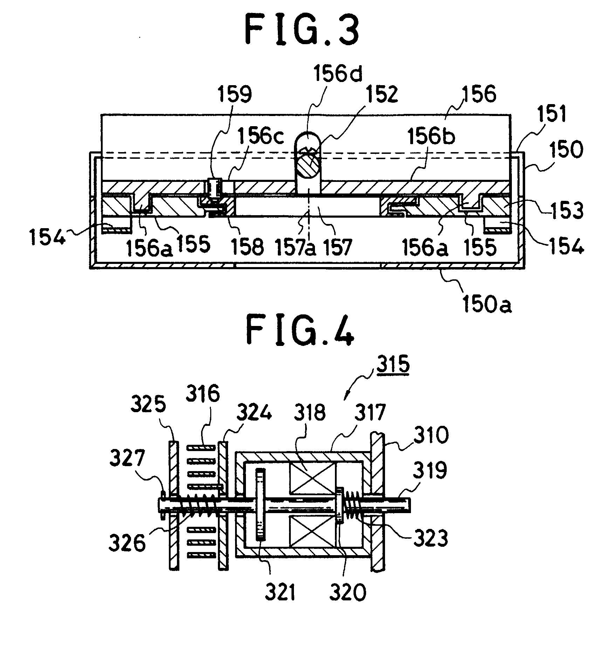

Figure 4 shows the construction of the spring device 315. A solenoid 318 is provided in a casing 317 which is secured to the base 310 of the sensor arm arrangement 302, and a slide shaft 319 is axially slidably received in an axial bore formed in the magnet 318. The slide shaft 319 has flanges 320, 321 and a spring 323 acts between the flange 320 and the well of the casing 317 so as to normally urge the slide shaft 319 to the left as viewed in Figure 4. Clutch disks 324, 325 are rotatably supported at one end of the slide shaft 319. A spiral spring 316 is connected to the clutch disk 324 at its one end. A spring 326 wound round the slide shaft 319 acts between the two clutch disks 324 and 325 so as to urge these disks away from each other, thereby preventing the clutch disk 325 from contacting the spiral spring 316. A washer 327 is secured to the end of the slide shaft 319.

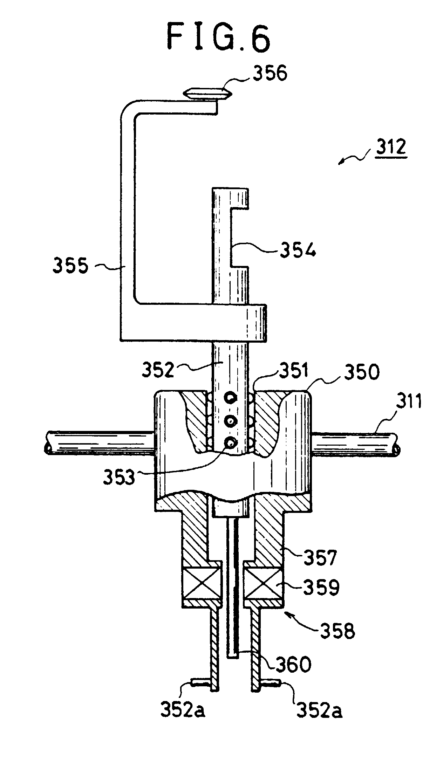

Figure 6 shows the construction of the sensor head 312. The sensor head 312 has a slider 350 which is supported by the rails 311. The slider 350 has a vertical axial bore 351 which receives a sensor shaft 352. A ball bearing 353 held by the sensor shaft 352 rotatably contacts the wall of the axial bore 351 so as to enable the sensor shaft 352 to smoothly rotate about the vertical axis and to move also in the axial direction. A notch having a semi-circular cross-section is formed in an upper portion of the sensor shaft 352. The notched surface 354 constitutes a template feeler which, when the profile of a template formed by profiling machining through profiling a spectacle lens frame, contacts a side surface of the template. An arm 355 attached to the center of the sensor shaft 352 rotatably carries a groove feeler 356 having a diamond-shaped cross-section and adapted to engage with the lens groove in the lens frame. The arrangement is such that notched surface, i.e., the template contact surface 354, and the peripheral apex of the groove feeler 356 are positioned on the central axis of the sensor shaft 352.

Beneath the slider 350 is provided a reading head 359 for measuring the amount of vertical shaft, namely, the Z-axis directional shift, of the sensor shaft 352, and a magnetic scale 360 of a sensor 358 is provided on the lower end of the sensor shaft 352.

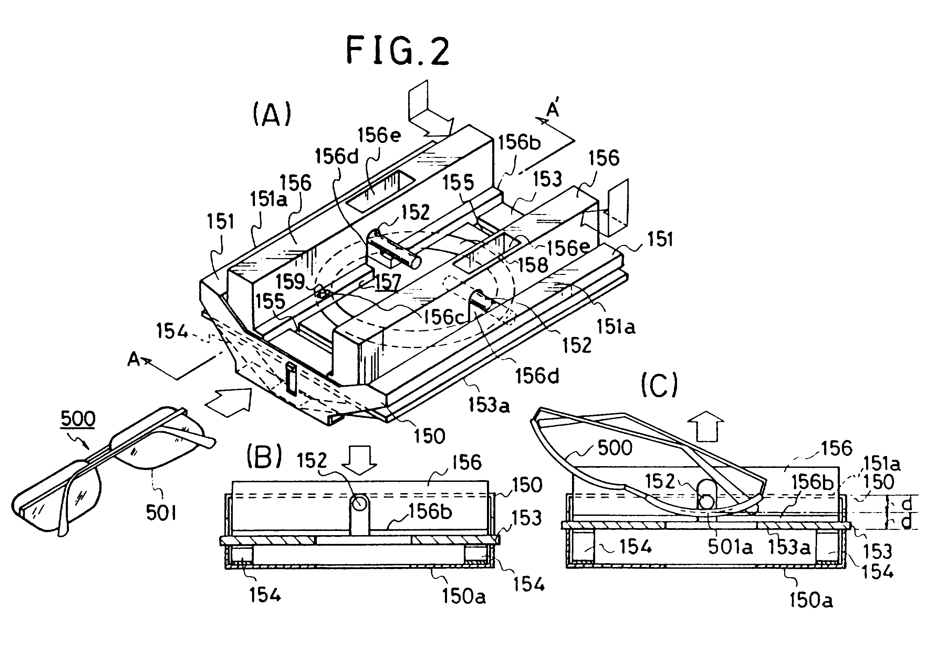

The construction of the frame holding means 100 will be explained with reference to Figures 2A and 3. Frame holder bars 152, 152 are fastened to the centers of the flanges 151, 151 of a stationary base 150. The flanges 151, 151 have side edges 151a, 151a. A movable base 153 having side edges 153a, 153a is received between the bottom panel 150a and the flanges 151 of the stationary base 150. The movable base 153 is supported by a pair of leaf springs 154, 154 which are situated on the bottom panel 150a of the stationary base 150.

The movable base 153 is provided with a pair of parallel guide grooves 155, 155 formed therein. Sliders 156, 156 are carried by the movable base 153 with their legs 156a, 156a slidably engaging the guide grooves 155, 155. On the other supporters, a circular opening 157 is formed in the center of the movable base 153. A spring 158 rotatably fits on the inner periphery of the circular opening 157. A pair of pins 159, 159 are received in slots 156c, 156c formed in stepped portions 156b, 156b of the sliders 156, 156. Vertical notches 156d, 156d are formed in the central portions of the sliders 156, 156 so as to be able to receive the frame holding bars 152, 152 mentioned before. Finger retaining holes 156e, 156e for receiving the operator's fingers are formed in the upper surfaces of the sliders 156, 156 so as to facilitate the manipulation of the sliders by the operator.

The operation of the frame profile measuring device heretofore explained will be described hereinunder with specific reference to Figures 2(B), 2(C) and 5(A), 5(B).

Referring first to Figure 2(B), the operator inserts his fingers into the holes 156c, 156c of the sliders 156, 156 so as to move the sliders 156, 156 sufficiently apart from each other and to press the same downwardly together with the movable base 153 against the resilient force of the rear springs 154, 154, thereby leaving a large gap between the holding bars 152, 152 and the stepped portions 156b, 156b of the sliders 156, 156. Then, one of the spectacle lens frames 501 which is to be measured is placed in this gap, and then the sliders 156, 156 are moved towards each other such that the upper and lower rims of the lens frame 501 contact the inner surfaces of the sliders 156, 156. In this embodiment since the sliders 156 and 156 are connected to each other through a ring 158, the displacement of one of the sliders causes the same displacement of the other.

Then, the frame is slid such that substantially the mid-point of the upper rim comes under the holding bar 152. As the operator releases the sliders 156, 156, the movable base 153 is lifted by the resilient force of the leaf springs 154, 154, so that the lens frame 500 is clamped between the stepped portions 156b, 156b and the holding bars 152, 152, and the frame 500 is held under such a condition that the geometrical center of the lens frame 501 substantially coincides with the center 157a of the circular opening 157. In this state, the distance d between the apex 501a of the lens groove in the lens frame 501 and the side edge 151a of the flange 151 equals the distance d between the apex 501a and the edge 153a of the movable base 153.

Then, the frame holding means 100 thus holding the frame 500 is placed in the gap between the supporters 211, 212 which have in advance been adjusted to define a gap of predetermined size therebetween. Then, the Y-axis motor 224 operates through a predetermined angle so that the miniature belt 226 is driven to shift the supporter 211 leftward by a predetermined amount. In consequence, the frame holding mean 100 and the supporter 212 are moved to the left so that the flange 228 comes off the pin 229. Simultaneously, the frame holding means 1,00 is clamped between the supporters 211,212 which are urged towards each other by the tension spring 230. In this stage, the edges 151a, 152a of the flange. 151 of the stationary base 150 of the frame holding means 100 are contacted by the slant surfaces 215, 217 of the supporters 211, 212, respectively,, while the edges 153a, 153b of the movable base 153 are contacted by the slant surfaces 216, 218 of the supporters 211, 212.

In the described embodiment, the distance between the apex 501a of the lens groove of the lens frame and the edge 151a is equal to that between the apex 501a and the edge 153a as explained before, so that the frame holding means 100 clamped between the supporters 211 and 212 is automatically, located such that the apex 501a of the lens groove in the lens frame 501 is positioned in a reference plane S which is defined by the ridge lines 219, 220 of the two supporters.

Then, the guide shaft motor 209 operates through a predetermined angle so that the frame holding means 100 is rotated to a position shown by the two-dot-and-dash line in Figure 5(A), whereby the reference plane S is stopped at the same plane as the initial position of the lens groove feeler 356 of the measuring means 300.

The Y-axis motor 224 further operates to move the supporters 211, 212 supporting the frame holding means 100 in the Y-axis direction by a predetermined amount so as to bring the center 159a of the circular opening of the frame holding means substantially into alignment with the axis of the rotary shaft 304 of the measuring means 300. In the course of this movement, the lens groove feeler 356 contacts the lens groove in the lens frame 501. The initial position of the lens groove feeler 356 is limited due to the fact that a pin 352a provided on the lower end of the sensor shaft 352 contacts a hanger 310a attached to the base 410 of the sensor arm, as will be seen from Figures 5(A) and 5(B). This arrangement ensures that the feeler 356 comes into the lens groove without fail, when the spectacle frame 500 is moved by the operation of the Y-axis motor 224.

Subsequently, the motor 301 operates in a stepping manner by an angle corresponding to a predetermined number of pulses each time. In this case, the sensor head 312 moves on the rails 311,311 in accordance with the profile of the spectacles frame 500, i.e., in accordance with the radius of the lens frame 501. Meanwhile, the displacement, i.e., the amount of movement, mf the sensor head 312 is read by means of the reading head against the magnetic scale 314.

Thus, the profile of the lens frame is measured as a function ($\rho n$, $\theta n$) (n = 1,2,3... N) of the rotation angle $\theta$ of the motor 301 and the reading from the reading head 313.

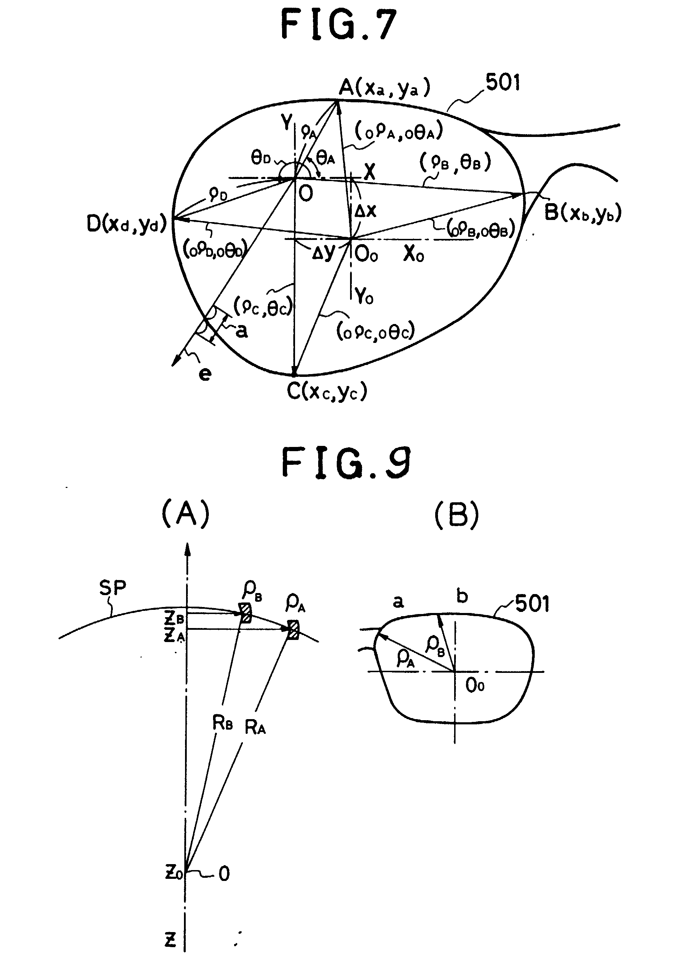

As stated before, the first measurement is conducted while the axis 0 of the rotary shaft 304 substantially coincides with the geometrical center of the lens frame 501 as shown in Figure 7. The second measurement is conducted as follows. The polar coordinate value ($\rho n$, $\theta n$) obtained in the first measurement are converted into rectangular coordinate data (Xn, Yn). From the rectangular coordinate data (Xn, Yn), there are selected a point B (Xb, Yb) having the maximum X-axis value, point D (xd, yd) having the minimum X-axis value, point A (xa, ya) having the maximum Y-axis value, and the point C (xc, yc) having the minimum Y-axis value.

Using the data concerning these positions, the geometric center 0o of the lens frame is determined in accordance with the following formula (1).

$$\text{Oo} (x_o, y_o) = (\frac{x_b+x_d}{2}, \frac{y_a+y_c}{2}) \qquad (1)$$

Then, the X-axis motor 206 and he Y-axis motor 224 are operated in accordance with the values xo and yo so as to move the frame holding means 100 clamped between the supporters 211, 212, thereby bringing the geometrical center Oo of the lens frame 501 into alignment with the axis O of rotation of the sensor arm 302. The second measurement of the lens frame profile is conducted in this state, so as to determine the values ($o\rho n$, $o\theta n$) (n=1:2:3:... N). When the second measurement is carried out, the amount of shift of the sensor head 312 is measured by the sensor 358. Consequently, three dimensional data ($o\rho n$, o n, $\theta Zn$) (N =1:2:3:...N) of the profile of the frame are obtained in accordance with the second measurement.

If the lens groove feeler 356 accidentally comes off from the lens frame 501 during the measurement of the lens frame 501, the measured data with largely deviate from the data measured in the preceding measuring cycle, as indicated by (e) in Fig. 7. Therefore, when the measured data has gone beyond a predetermined radius changeable range (a), the rotation of the sensor arm 302 is stopped and, at the same time, the solenoid 318 of the spring device shown in Fig. 4 is energized so as to attract the flange 321. In consequence, the clutch disks 324, 325 clamp the spiral spring 316 so as to stop the winding action of the spring 316, thereby avoiding any accident such as damaging of the spectacle frame which may otherwise be caused by interference between the arm 355 of the sensor head 312 and the lens frame. In the event of accidental disengagement of the feeler 356, the spectacle frame 500 is reset to the initial measuring position, and the measurement is commenced again in this state.

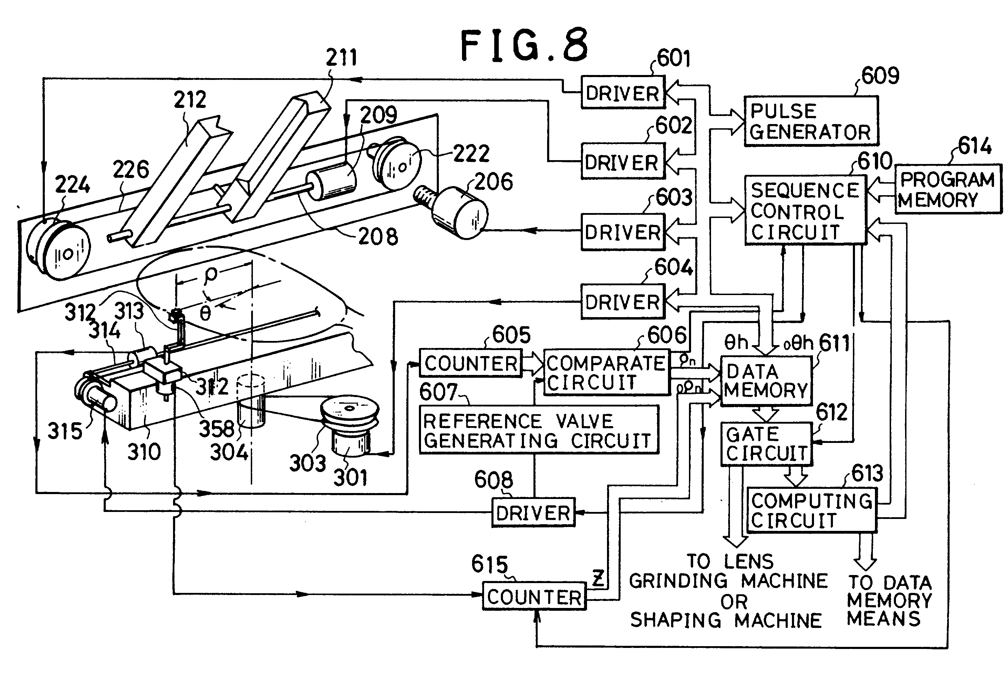

Fig. 8 is a block diagram of a computing and controlling circuit which is incorporated in the frame profile measuring device of the invention. The circuit has driver circuits 601 through 604 which are connected, respectively, to the X-axis motor 206, Y-axis motor 224, sensor arm driving motor 301 and the guide shaft driving motor 209. These driver circuits drive respective pulse motors in accordance with the numbers of pulses delivered by a pulse generator 609, under the control of a sequence control circuit 610. The reading output of the reading head 313 is counted by a counter 605 the output of which is delivered to a comparator circuit 606. The comparator circuit 606 compares the amount of change in the counted value derived from the counter 605 with a reference signal corresponding to the aforementioned radius changeable range (a) derived from a reference value generating circuit 607. When the counted value is within the range (a), the number n counted by the counter 605 and the sensor arm rotation angle $\theta n$ calculated from the number of pulses delivered by the pulse generator 609 are input as polar coordinate values ($\rho n$, $\theta n$) to a data memory 611. Then, the sequence control circuit 610 switches a gate circuit 612 so as to connect it to the computer circuit 613 which in turn computes the data concerning the position of the geometrical center Oo of the lens frame 501. The computed data is input to the sequence control circuit 610. Upon receipt of this data from the computing circuit 613, the sequence control circuit 610 determines the coordinate values Xo, Yo in accordance with the formula (1) mentioned earlier, and inputs necessary numbers of pulses to the drivers 601, 603 so as to drive the motors 206, 224, thereby bringing the center of the lens frame 500 into alignment with the axis of rotation of the sensor arm 302. At the same time, the sequence control circuit 610 commands a counter 615 to count the output of the sensor 358. Then, the profile data ($o\rho n$, $o\theta n$, Zn) is measured again and is stored in the data memory 611. If the count value $o\rho n$ or $o\theta n$ derived from the counter 605 exceeds the radius changeable range (a) derived from the reference value generating circuit 607, the comparator informs the sequence control circuit of this fact, and the circuit 610 activates the driver 608 so as to energize the solenoid 318 of the spring device 315, thereby stopping the movement of the feeler 356, while terminating the supply of pulses to the driver 604 so as to prevent the motor 301 from operating. The profile data ($o\rho n$, $o\theta n$, Zn) stored in the data memory 611 is supplied, through switching of the gate circuit 612 as required, to a suitable device such as a digital lens grinding machine, shaping machine or a judging device for judging whether the frame has been machined in conformity with the design data, which machines and device having been proposed by the same applicant in earlier Japanese Patent Application No. 225197/1983. The computing circuit 613 can calculate a curve value M of the lens groove of the frame 500 from the data Zn stored in the data memory 611. Referring now to Figures 9(A) and (B), the radius of curvature R of the sphere SP including the locus of the lens groove of the frame 501 is calculated from the data ($\rho$n, $\theta$n, Zn) for at least two points a and b as

$$\left. \begin{array}{l} R^2 = \rho_A{}^2 + (Z_O - Z_A)^2 \\ R^2 = \rho_B{}^2 + (Z_O - Z_B)^2 \end{array} \right\} \quad \cdots\cdots\cdots (2) \quad ,$$

and the curve value M can then be computed as

$$M = \frac{Cc\text{-}1}{R} \times 1000 \tag{3}$$

(Cc designates a constant: 1,523)

The sequence control circuit executed the above-explained measuring steps in accordance with the program stored in a program memory 614.

## Claims

1. A device for measuring the profile of a spectacle lens frame (500) comprising

holding means (100) for holding the frame (500), supporting means (200) for supporting said frame holding means (100) and
measuring means (300) including a sensor arm arrangement (302) which is mounted on a rotatable vertical shaft (304) and a feeler (356) which is mounted on a sensor shaft (352) which is movable parallel to the axis of said vertical shaft (304),
said holding means (100) support the rims of said spectacle lens frame (500) unrotatably in said supporting means (200), and
said measuring means (300) measuring the profile of the spectacle lens frame (500),

**characterised in that**

a) said frame holding means (100) is separable from said supporting means (200);
b) said supporting means (200) being capable of moving the spectacle lens frame (500) in its holding means (100), toward said measuring means (300) and within a plane which is perpendicular to said vertical shaft (304) and said rims are held between a holding bar (152) and a movable base (153) which is biased by leaf springs (154) vertical to the optical axis of said spectacle lens;
c) said measuring means (300) is provided for measuring the profile of the spectacle lens frame (500) in terms of polar coordinate information ($\rho_n$, $\theta$n) (n = 1, 2, 3, N),
said polar coordinate information ($\rho_n$, $\theta_n$) (n = 1, 2, 3, ..., N) being derived from the distance ($\rho_n$) between the axis (0) of said vertical shaft (304) and the axis of said sensor shaft (352) and the angle of rotation ($\theta_n$) of said vertical shaft (304) for bringing the geometrical center ($O_o$) of the lens frame (500) into alignment with the axis (O),
d) said sensor shaft (352) is movable along said sensor arm arrangement (302);
e) said feeler (356) has a diamond-shaped cross-section;
f) said frame holding means (100) is automatically located such that a predetermined apex (501a) of the locus of the groove of the spectacle lens frame (500) is held by said frame holding means (100) in a predetermined plane (S) and said feeler (356) is located at said predetermined apex (501a) of the frame groove at the initial position thereof at the beginning of a measurement.

2. A device in accordance with Claim 1, characterised in that processing means (613) are included for calculating the predetermined rotation center (Oo) of the sensor arm arrangement (302) from the polar coordinate information (pn, θn) as obtained when the rotation center (0) of the sensor arm arrangement (302) is located at said initial position, and displacement means (203, 206; 211, 212, 222, 223, 224, 226) for displacing the supporting means (200) or said measuring means (300), such that the rotation center of the sensor art arrangement (302) is located at the predetermined rotation center (0o).

3. A device in accordance with Claim 1, characterised in that said supporting means (200) include at least two supporters (211, 212) each of which has slant surfaces (215, 216; 217, 218) intersecting at a respective ridge line (219, 220) and which holds said frame holding means (100) therebetween, said predetermined plane (S) is defined by said ridge lines (219, 220), and said supporters (211, 212) are rotatable about a guide shaft (208).

**Patentansprüche**

1. Gerät zum Messen des Profils eines Brillenlinsenrahmens (500) mit einer Haltevorrichtung (100) zum Halten des Rahmens (500), einer Tragevorrichtung (200) zum Tragen der Rahmenhaltevorrichtung (100) und einer Meßvorrichtung (300) mit einer Sensoranordnung (302), die auf einer drehbaren, vertikalen Welle (304) montiert ist, und einem Fühler (356), der auf einer Sensorwelle (352) montiert ist, die parallel zur Achse der vertikalen Welle (304) bewegbar ist, wobei die Haltevorrichtung (100) die Ränder des Brillenlinsenrahmens (500) unverdrehbar in der Tragevorrichtung (200) trägt, und die Meßvorrichtung (300) das Profil des Brillenlinsenrahmens (500) mißt,
**dadurch gekennzeichnet, daß**

   a) die Rahmenhaltevorrichtung (100) von der Tragevorrichtung (200) trennbar ist;

   b) die Tragevorrichtung (200) in der Lage ist, den Brillenlinsenrahmen (500) in seiner Haltevorrichtung (100) gegen die Meßvorrichtung (300) und innerhalb einer Ebene, die senkrecht auf die vertikale Welle (304) ist, zu bewegen, und daß die Ränder zwischen einem Haltestab (152) und einer beweglichen Basis (153) gehalten werden, die durch Blattfedern (154) senkrecht zur optischen Achse der Brillenlinse vorgespannt ist;

   c) die Meßvorrichtung (300) zum Messen des Profils des Brillenlinsenrahmens (500) in Ausdrücken der Polarkoordinateninformation vorgesehen ist ($\rho_n$ $\theta_n$) (n = 1, 2, 3, ..., N), wobei die Polarkoordinateninformation ($\rho_n$, $\theta_n$) (n = 1, 2, 3, ......, N) aus dem Abstand ($\rho_n$) zwischen der Achse (0) der vertikalen Welle (304) und der Achse der Sensorwelle (305) und dem Rotationswinkel ($\theta_n$) der vertikalen Welle (304) abgeleitet ist, um die geometrische Mitte ($0_o$) des Linsenrahmens (500) mit der Achse (0) auszurichten,

   d) die Sensorwelle (352) entlang der Sensorarm-Anordung (302) bewegbar ist;

   e) der Fühler (356) einen rautenförmigen Querschnitt hat;

   f) die Rahmenhaltevorrichtung (100) automatisch derart angeordnet ist, daß ein vorbestimmter Scheitelpunkt (501a) des Ortes der Rille des Brillenlinsenrahmens (500) durch die Rahmenhaltevorrichtung (100) in einer vorbestimmten Ebene (S) gehalten ist, und der Fühler (356) an dem vorbestimmten Scheitelpunkt (501a) der Rahmenrille an der Anfangsposition hiervon am Beginn der Messung angeordnet ist.

2. Vorrichtung nach Anspruch 1, dadurch gekennzeichnet, daß eine Rechnereinrichtung (613) zur Berechnung eines vorbestimmten Rotationszentrums ($O_o$) des Sensorarmes (302) aus den polaren Koordinatenwerten ($\rho_n$, $\theta_n$) vorgesehen ist, welche erhalten werden, wenn das Rotationszentrum (O) des Sensorarmes (302) in der anfänglichen Lage angeordnet ist und daß eine Bewegungseinrichtung (203, 206; 211, 212, 222, 223, 224, 226) zum Verschieben der Trageinrichtung (200) oder der Meßeinrichtung (300) angeordnet ist, so daß das Rotationszentrum der Sensorarmanordnung im vorbestimmten Rotationszentrum ($O_o$) vorgesehen ist.

3. Vorrichtung nach Anspruch 1, dadurch gekennzeichnet, daß die Trageinrichtung (200) mindestens zwei Träger (211, 212) umfaßt, von denen jeder schräge Oberflächen (215, 216; 217, 218) aufweist, die in einer gemeinsamen Firstlinie (210, 220) zusammenstoßen und welche die Rahmen-Halteeinrichtung (100) zwischen sich halten, und daß die vorbestimmte Ebene (S) durch dir Firstlinien (219, 220) definiert ist und die Träger (211, 212) um einen Führungsschaft (208) drehbar sind.

**Revendications**

1. Dispositif pour mesurer le profil d'une monture (500) de lunettes comportant

un moyen (100) de maintien destiné à maintenir la monture (500), un moyen (200) de support destiné à supporter ledit moyen (100) de maintien de monture, et

un moyen (300) de mesure comprenant une disposition (302) de bras de capteur qui est montée sur un arbre vertical (304) pouvant tourner et un palpeur (356) qui est monté sur un arbre (352) de capteur qui peut être déplacé parallèlement à l'axe dudit arbre vertical (304),

ledit moyen (100) de maintien supportant les bords de ladite monture (500) de lunettes sans possibilité de rotation dans ledit moyen de support (200), et ledit moyen de mesure (300) mesurant le profil de la monture (500) de lunettes,

caractérisé en ce que

a) ledit moyen (100) de maintien de monture peut être séparé du moyen (200) de support ;

b) ledit moyen (200) de support pouvant déplacer la monture (500) de lunettes dans son moyen de maintien (100), vers ledit moyen de mesure (300) et dans un plan qui est perpendiculaire audit arbre vertical (304) et lesdits bords sont maintenus entre une barre (152) de maintien et une base mobile (153) qui est rappelée par des ressorts à lames (154) dans une orientation verticale par rapport à l'axe optique des verres desdites lunettes ;

c) ledit moyen de mesure (300) est prévu pour mesurer le profil de la monture (500) de lunettes en termes d'informations de coordonnées polaires $(\rho_n, \theta_n)$ (n = 1, 2, 3, .... N).

lesdites informations de coordonnées polaires $(\rho_n, \theta_n)$ (n = 1, 2, 3, .... , N) établies à partir de la distance $(\rho_n)$ entre l'axe (O) dudit arbre vertical (304) et l'axe dudit arbre (352) de capteur et l'angle de rotation $(\theta_n)$ dudit arbre vertical (304) pour amener le centre géométrique $(O_O)$ de la monture (500) de lunettes en alignement avec l'axe (O),

d) ledit arbre (352) de capteur étant mobile le long de ladite disposition (302) de bras de capteur ; e) ledit palpeur (356) présente une section transversale en forme de losange ;

f) ledit moyen (100) de maintien de monture est placé automatiquement de manière qu'un apex prédéterminé (501a) du lieu de la rainure de la monture (500) de lunettes soit maintenu par ledit moyen (100) de maintien de monture dans un plan prédéterminé (S) et ledit palpeur (356) est placé audit apex prédéterminé (501a) de la rainure de la monture dans sa position initiale au commencement d'une mesure.

2. Dispositif selon la revendication 1, caractérisé en ce que des moyens de traitement (613) sont compris pour calculer un centre de rotation prédéterminée (Oo) de la disposition du bras de capteur (302) à partir des informations de coordonnées polaire $(\rho_n, \theta_n)$ telle qu'obtenue lorsque le centre de rotation (O) de la disposition de bras de capteur (302) est situé au niveau de ladite position initiale, et un moyen de déplacement (203, 206; 211, 212. 222, 223, 224, 226) pour déplacer le moyen de support (200) ou ledit moyen de mesure (300), de telle façon que le centre de rotation de la disposition de bras de capteur (302) soit située au niveau du centre de rotation prédéterminé (Oo).

3. Dispositif selon la revendication 1, caractérisé en ce que ledit moyen de support (200) comprend au moins deux supports (211, 212), dont chacun comporte des surfaces en pente (215, 216; 217, 218) se coupant au niveau d'une ligne d'arête respective (210, 220) et qui maintient ledit moyen de maintien de monture (100) entre celles-ci, ledit plan prédéterminé (S) est défini par lesdites lignes d'arête (219, 220), et lesdits supports (211, 212) peuvent tourner autour d'un arbre de guidage (208).

# FIG.1

# FIG.2

(A)

(B)

(C)

EP 0 190 450 B2

# FIG.3

# FIG.4

# FIG.5

(A)

(B)

EP 0 190 450 B2

# FIG.6

356

312

355

354

352

351 350

311

353

357

359

358

360

352a 352a

# FIG.7

# FIG.9

(A)          (B)

FIG.8